# EUROPÄISCHE PATENTSCHRIFT

(11) **EP 2 723 589 B1**
(45) Veröffentlichungstag und Bekanntmachung des Hinweises auf die Patenterteilung: **08.04.2015**
(21) Anmeldenummer: 12729104.5
(22) Anmeldetag: 20.06.2012
(51) Int. Cl.: B60H 1/00, B60H 1/22, H05B 6/10

(54) **ELEKTRISCHE HEIZUNG FÜR EIN FAHRZEUG MIT ELEKTRO- ODER HYBRIDANTRIEB**
ELECTRIC HEATER FOR A VEHICLE HAVING AN ELECTRIC DRIVE OR HYBRID DRIVE
CHAUFFAGE ÉLECTRIQUE POUR VÉHICULE AVEC GROUPE MOTEUR ÉLECTRIQUE OU HYBRIDE

(30) Priorität: 22.06.2011 DE 102011105385
(43) Veröffentlichungstag der Anmeldung: 30.04.2014
(73) Patentinhaber: Behr-Hella Thermocontrol GmbH, 70469 Stuttgart (DE)
(72) Erfinder: SCHRÖER, Burkhard, 58706 Menden (DE); THIEMANN, Hans-Joachim, 33142 Büren (DE)
(74) Vertreter: Von Kreisler Selting Werner - Partnerschaft von Patentanwälten und Rechtsanwälten mbB
(86) Internationale Anmeldenummer: PCT/EP2012/061792
(87) Internationale Veröffentlichungsnummer: WO 2012/175539

(56) Entgegenhaltungen:
- EP-A1- 2 103 461
- DE-A1-102004 062 977
- DE-A1-102009 042 581

## Beschreibung

Die Erfindung betrifft eine elektrische Heizung für ein Fahrzeug mit Elektro- oder Hybridantrieb, also für ein Fahrzeug mit Hochvoltbordnetz.

Elektrische Heizkörper in Hochvoltbordnetzen von Fahrzeugen müssen aufwendig isoliert und berührungssicher ausgelegt sein. Die elektrische Isolation stellt dabei auch immer einen nicht unerheblichen Wärmewiderstand dar, welcher es erschwert, die Heizenergie an ein die Wärme transportierendes Medium abzugeben. So benötigen beispielsweise die bekannten PTC-Heizer eine bei Hochspannungsbordnetzen aufwendige elektrische Isolierung zwischen der Wärmequelle und der Wärmesenke. Die Wärmesenke ist beispielsweise das Wärmeträgermedium.

Heizungen der vorstehend genannten Art können beispielsweise in Fahrzeugen mit Elektro- oder Hybridantrieb für beispielsweise die Erwärmung der Batterie und/oder der Fahrzeugkabine genutzt werden.

Elektrische Heizungen der vorstehend genannten Art sind beispielsweise aus DE-A-10 2009 028 328 bekannt, von der im Oberbegriff des Anspruchs 1 ausgegangen wird. Ferner ist DE-A-10 2008 056 991 eine elektrische Heizung für die Belüftung eines Fahrzeuges bekannt. Aus EP-A-0 964 604, FR-A-2 831 108 und DE-A-100 15 064 ist die Nutzung von Wirbelströme zum Beheizen eines Wärmeträgermediums in einem Kraftfahrzeug bekannt, wobei permanente Magnetfelder erzeugende Magnete verwendet werden.

Aufgabe der Erfindung ist es, eine elektrische Heizung für ein Fahrzeug mit Elektro- oder Hybridantrieb zu schaffen, die hinsichtlich der elektrischen Sicherheitsmaßnahmen von Vorteil ist.

Zur Lösung dieser Aufgabe wird mit der Erfindung eine elektrische Heizung für ein Fahrzeug mit Elektro- oder Hybridantrieb gemäß Anspruch 1 vorgeschlagen, wobei einzelne Ausgestaltungen der Erfindung Gegenstand der jeweiligen Unteransprüche sind.

Mit der Erfindung wird also der Einsatz einer Induktionsheizung bei einem Fahrzeug mit Elektro- oder Hybridantrieb vorgeschlagen, wobei die Induktionsheizung ein Wärmeträgermedium erhitzt, das wiederum seine Wärmeenergie über einen Wärmetauscher an dessen Umgebung abgibt. Auf diese Art und Weise kann beispielsweise die Batterie des Fahrzeuges und/oder dessen Innenraum erwärmt werden.

Der Vorteil der Induktionsheizung besteht unter anderem darin, dass die Wärme direkt, d.h. ohne thermische Verluste durch Isolationen o.dgl., an das Wärmeträgermedium abgegeben werden kann. Dabei werden in das ferromagnetische Material des Heizelements der Induktionsheizung Wirbelströme induziert. Falls durch die Verwendung entsprechender Materialien zusätzlich Ummagnetisierungsverluste auftreten, tragen diese ebenfalls zur Erwärmung des Heizelementes bei. Nach der Erfindung kann eine Induktionsheizung ohne galvanische Verbindung zur Steuerelektronik und damit auf denkbar einfache Art der Isolation und unter Vermeidung thermischer Übergangswiderstände in den das Wärmeträgermedium transportierenden Kreislauf eingebaut werden.

Das Heizelement kann gemäß einer vorteilhaften Ausgestaltung der Erfindung als vom Wärmeträgermedium durchströmter Wärmetauscher mit ferromagnetischem Material ausgebildet sein, das einem magnetischen Wechselfeld ausgesetzt ist. Die Magnetfeld-Erzeugungseinheit zur Erzeugung des magnetischen Wechselfeldes ist außerhalb des Wärmetauschers angeordnet. Die auf diese Art und Weise in das Wärmeträgermedium eingebrauchte Wärme wird über dieses zu einem Wärmetauscher transportiert, um durch diesen an seine Umgebung abgegeben zu werden. Auf diese Art und Weise lässt sich beispielsweise der Innenraum bzw. die Fahrzeugkabine und/oder die Batterie des Fahrzeuges beheizen.

Nahe dem Induktionsheizungs-Wärmetauscher befindet sich vorteilhafterweise eine stromdurchflossene Spule, die insbesondere feststehend angeordnet ist und ein magnetisches Wechselfeld erzeugt. Dieses induziert in den Induktionsheizungs-Wärmetauscher durch Induktion Wirbelströme, die das Metall (ferromagnetisches Material) des Wärmetauschers aufheizen. Die hierfür üblicherweise zur Anwendung kommenden Frequenzen des magnetischen Wechselfeldes liegen beispielsweise im Bereich von etwa 25 kHz bis 50 kHz. Obwohl Induktionsbeheizungen prinzipiell bei nahezu sämtlichen metallischen (stromleitenden) Gegenständen (z.B. auch aus Aluminium) funktionieren, ist für eine ausreichend gute Funktion ein Heizelement aus ferromagnetischem Material notwendig. Das (ferromagnetische) Material sollte ferner einen ausreichend höheren spezifischen elektrischen Widerstand aufweisen als das Material (vornehmlich Kupfer), aus dem die Induktionsspule oder die Induktionsspulen bestehen. Das ist beispielsweise bei Eisen der Fall. Die elektrische Isolation der Induktionsspulen kann durch bekannte Verwahren, welche den Induktionsvorgang nicht behindern, erfolgen. Die notwendige, einfach zu realisierende elektrische Isolation beinhaltet somit keine störenden Wärmewiderstände. Der Wärmetauscher hat keine galvanische Verbindung zu spannungsführenden Teilen. Der Heiz-/Kühlkreislauf des Fahrzeuges mit Elektro- oder Hybridantrieb kann unverändert weiterbenutzt werden, da diese Kreisläufe bereits ein Wärme- bzw. Kälteträgermedium aufweisen.

Eine Pulsweitenansteuerung der Magnetfeld-Erzeugungseinheit ermöglicht die Leistungsregelung der Induktionsheizung.

Durch die Anwendung eines ferromagnetischen Materials mit einer Curie-Temperatur zwischen 120 °C und 160 °C kann die Maximaltemperatur des Heizelements zusätzlich automatisch begrenzt werden.

Mit der Erfindung wird also eine elektrische Heizung vorgeschlagen, bei der das Heizelement keine galvanische Verbindung zur Ansteuerelektronik aufweist, was die Montage und elektronische Isolation vereinfacht. Insbesondere brauchen keine elektrischen Verbindungsleitungen wie Kabel oder dergleichen bis in die das Wärmeträgermedium führenden Leitung verlegt werden. Vielmehr kann das Heizelement ohne Elektroverbindung untergebracht werden, was unter anderem auch den Vorteil der Vormontage der Elektroheizung hat.

Darüber hinaus ist die Anzahl an Komponenten der erfindungsgemäßen Heizung gegenüber einer Widerstandsheizung nach dem Stand der Technik geringer. Während eine herkömmliche Widerstandsheizung eine Ansteuerelektronik, (PTC-)Heizelemente, einen Kühlkörper oder Wellrippen, die die Wärme an die Luft abgeben, und Steckverbinder zwischen Ansteuerelektronik und Heizelementen aufweist, benötigt die erfindungsgemäße Induktionsheizung lediglich eine Ansteuerelektronik und das (Induktions-)Heizelement, das ferromagnetisches Material aufweist. Ein weiterer Vorteil der Erfindung ist, dass das von dem Wärmeträgermedium umströmte Heizelement selbst vollständig spannungslos ist und die Ansteuerelektronik komplett gekapselt sein kann.

In vorteilhafter Weiterbildung der Erfindung ist vorgesehen, dass die Magnetfeld-Erzeugungseinheit außerhalb der das flüssige Wärmeträgermedium führenden Leitung angeordnet ist und insbesondere einen elektrischen Spulenkörper aufweist, der von einem seine Richtung alternierend ändernden elektrischen Strom durchflossen werden kann, wobei ein wechselndes Magnetfeld erzeugt wird, in dem das ferromagnetische Material des Heizelements angeordnet ist.

Ferner weist das Heizelement mit Vorteil ein thermisch leitendes Material (z.B. Metall) auf, mit dem das ferromagnetische Material des Heizelements thermisch gekoppelt ist. Die infolge von induzierten Wirbelströme/ und gegebenenfalls Ummagnetisierungsverlusten in dem ferromagnetischen Material erzeugte Wärme wird unter anderem über das wärmeleitende Material an das flüssige Wärmeträgermedium abgegeben. Das Heizelement weist dazu zweckmäßigerweise eine vergrößerte Oberfläche auf (z.B. in Form von Kühlrippen oder dergleichen), an der das flüssige Wärmeträgermedium entlang streicht.

Es ist bekannt, dass ferromagnetische Materialien oberhalb einer materialspezifischen Temperatur, nämlich der Curie-Temperatur, ihre ferromagnetischen Eigenschaften verlieren. Dies kann bei der Erfindung genutzt werden, um eine Überhitzung des Heizelements zu verhindern, womit sicherheitsrelevanten Erfordernissen einer elektrischen Fahrzeugheizung Genüge geleistet werden kann. Ferromagnetische Materialien mit einer Curie-Temperatur ab z. B. 50°C sind bekannt. Für die Anwendung als Heizelement einer Fahrzeugheizung kommen mit Vorteil insbesondere ferromagnetische Materialien mit einer Curie-Temperatur zwischen 120° und 150° in Frage, die den temperaturrelevanten Sicherheitsanforderungen in einem Fahrzeug Rechnung tragen.

Die für die Erfindung wesentlichen Gesichtspunkte und Vorteile lassen sich wie folgt zusammenfassen:
1. Das flüssige Wärmeträgermedium wird mittels eines Heizelements mit ferromagnetischem Material erwärmt, welches einem wechselnden Magnetfeld (Induktionsfeld) ausgesetzt ist.
2. Das Heizelement weist ein ferromagnetisches Material wie z.B. Eisen, Nickel oder weiteren anderen Metall-Legierungen auf.
3. Das Heizelement kann eine Kombination aus einem ferromagnetischen Material und einem weiteren thermisch gut leitenden z.B. metallischem Material (Aluminium) aufweisen. Beide Materialien sind thermisch gut gekoppelt.
4. Das thermisch gut angekoppelte Material (z. B. Aluminium) kann die Wärme über eine große Oberfläche an das flüssige Wärmeträgermedium abgeben.
5. Abhängig von der Umgebung, können ferromagnetische Materialien mit angepasster Curie-Temperatur eingesetzt werden, um ungewollte Überhitzungen zu vermeiden. Das ferromagnetische Material verliert ab der Curie-Temperatur sein magnetisches Verhalten und kann sich somit nicht weiter erwärmen.
6. Ferromagnetische Materialien existieren schon ab 50°C Curie-Temperatur.
7. Das ferromagnetische Material kann in dünnen Schichten auf den Wärmeverteiler (z. B. Aluminium) aufgebracht werden.
8. Die Heizung kann sowohl als Gitter wie auch als Flächenkörper gestaltet sein.
9. Die Elektronik zur Ansteuerung der Induktionsspule ist außerhalb der das Wärmeträgermedium führenden Leitung angeordnet.
10. Der Induktionswärmetauscher kann aus Eisenblech (ferromagnetisch) bestehen, welches mit einer Spule durch induzierte Wirbelströme direkt beheizt wird. Über das erwärmte Eisenblech erfolgt dann der direkte Wärmeeintrag in das Wärmeträgermedium.
11. Die Verwendung von Öl oder anderen korrosionsverhindernden Flüssigkeiten als Wärmeträgermedium ist sinnvoll, da das ferromagnetische Material der Induktionsheizung korrosionsanfällig ist. Selbstverständlich könnte man beispielsweise Wasser als Wärmeträgermedium einsetzen, wenn die ferromagnetischen Teile, mit denen das Wasser in Berührung kommt, entsprechend korrosionsgeschützt sind.
12. Die an das Hochvoltbordnetz (beispielsweise 400 V-Netz) angeschlossene Spule kann optimal isoliert aufgebaut werden. Der Spulendraht selbst sollte isoliert sein. Der Draht kann mittels einer Kunststoffaufnahme zusätzlich isoliert werden. Somit ist die vollständige Isolation zwischen dem Hochvoltbordnetz und dem Heizkreis auf einfache und sichere Art möglich.
13. Es ist keine die Energieeffizienz verringernde elektrische Isolierung notwendig. Vielmehr ist ein optimaler Wärmeübergang zwischen der Wärmequelle (Heizelement) und der zu heizenden Flüssigkeit bzw. dem zu heizenden Wärmetransportmedium (Wärmesenke) gegeben.

Die Erfindung wird nachfolgend anhand zweier Ausführungsbeispiele und unter Bezugnahme auf die Zeichnung näher erläutert. Im Einzelnen zeigen dabei:
- Fig. 1: schematisch einen Heizkreislauf in einem Fahrzeug mit Elektro- bzw. Hybridantrieb zur Erwärmung der Batterie des Fahrzeuges,
- Fig. 2: schematisch einen Heizkreislauf zur Erwärmung sowohl des Innenraums als auch der Batterie eines Fahrzeuges mit Elektro- oder Hybridantrieb und
- Fig. 3: eine beispielhafte Darstellung für eine Induktionsheizung, wie sie als Heizelement in den Kreisläufen gemäß den Fign. 1 und 2 eingesetzt werden kann.

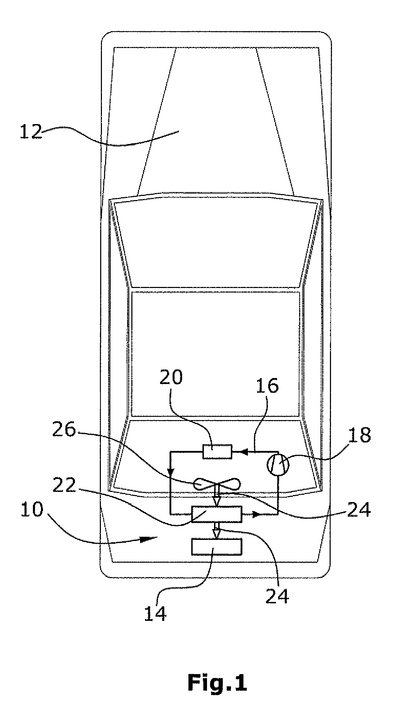

Fig. 1 zeigt schematisch ein erstes Ausführungsbeispiel für einen Heizkreislauf 10 in einem Elektro- bzw. Hybridfahrzeug 12, der zur Temperierung der Batterie 14 verwendet wird. Der Heizkreislauf 10 weist eine geschlossene Leitung 16 auf, in der sich ein Wärmeträgermedium befindet und transportiert wird. Hierzu dient eine Pumpe 18. Der Heizkreislauf 10 weist ferner eine elektrische Induktionsheizung 20 und einen Wärmetauscher 22 auf. Die elektrische Induktionsheizung 20 erwärmt das Wärmeträgermedium, das seine Wärme über den Wärmetauscher 22 an dessen Umgebung abgibt. Der Wärmetauscher 22 ist in diesem Ausführungsbeispiel von einem Luftstrom 24 durchströmt, der von einem Gebläse 26 erzeugt wird. Im Luftstrom 24 befindet sich die Batterie 14, die somit erwärmt wird.

Alternativ zu einer Erwärmung der Batterie mittels eines Luftstromes kann das Wärmeträgermedium auch die Batterie 14 selbst durchströmen. Andere an sich bekannte Mechanismen zur thermischen Kopplung des Wärmetauschers 22 mit der Batterie 14 sind ebenfalls denkbar.

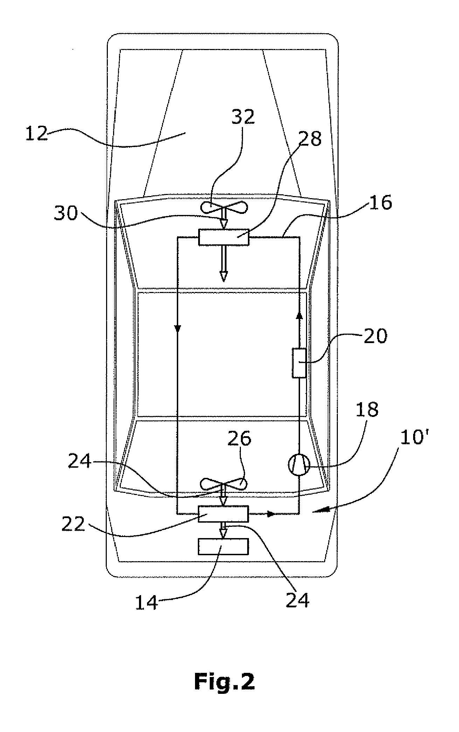

In Fig. 2 ist ein alternativ aufgebauter Heizkreislauf 10' gezeigt. Die Elemente des Heizkreislaufs 10', die identisch bzw. funktionsgleich mit den Elementen des Heizkreislaufs 10 der Fig. 1 sind, sind in Fig. 2 mit den gleichen Bezugszeichen versehen.

Der Heizkreislauf 10' weist wiederum eine geschlossene Leitung 16 auf, in der ein Wärmeträgermedium strömt. Hierzu dient die Pumpe 18. Eine elektrische Induktionsheizung 20 erwärmt das Wärmeträgermedium. Das Wärmeträgermedium passiert nacheinander zwei Wärmetauscher, und zwar zunächst einen ersten Wärmetauscher 28 und alsdann den (zweiten) Wärmetauscher 22 zur Erwärmung der Batterie 14. Die beiden zuvor genannten Wärmetauscher könnten auch in umgekehrter Reihenfolge von dem Wärmeträgermedium durchströmt sein. Der (zweite) Wärmetauscher 22 ist wiederum von einer Luftströmung 24 durchzogen, in der die Batterie 14 angeordnet ist. Die Luftströmung 24 wird durch ein Gebläse 26 erzeugt.

Auch der andere erste Wärmetauscher 28 wird von einem Luftstrom 30 durchsetzt, der wiederum durch ein Gebläse 32 oder alternativ durch den Fahrtwind erzeugt wird. Die auf diese Weise beheizte Luft dient der Erwärmung der Fahrzeugkabine bzw. des Innenraums des Fahrzeuges 12.

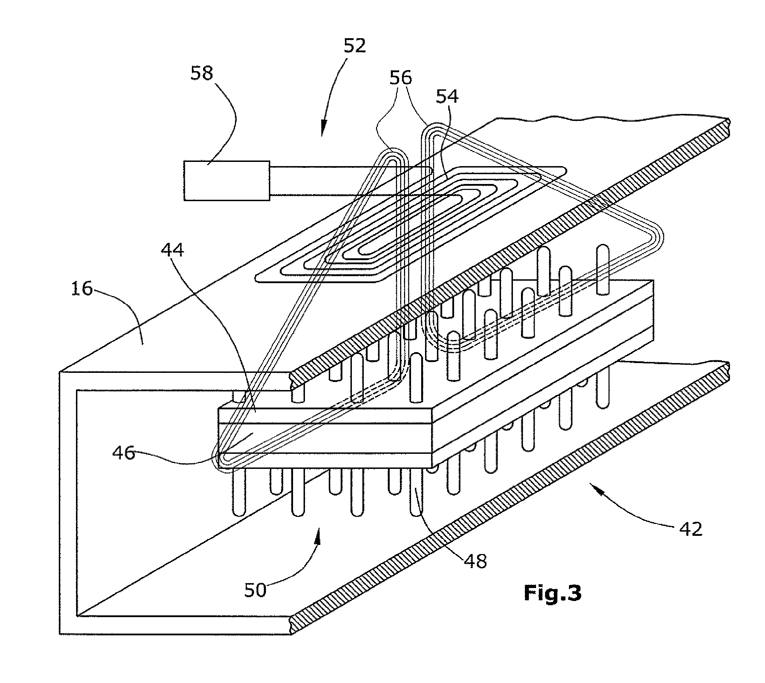

Anhand von Fig. 3 soll schematisch ein Beispiel für den Aufbau der elektrischen Induktionsheizung 20 beschrieben werden, wie sie Gegenstand der Heizkreisläufe 10 und 10' der Fign. 1 und 2 sein kann.

In Fig. 3 ist perspektivisch und teilweise aufgebrochen ein Teil Abschnitt der Leitung 16 des Heizkreislaufes 10 bzw. 10' gezeigt, in dem ein Heizelement 42 angeordnet ist. Das Heizelement 42 weist eine ferromagnetische Schicht 44 auf, mit der ein thermisch leitendes Material 46, wie z.B. ein Aluminiumlegierungsmateriai oder ein anders metallisches Material thermisch gekoppelt ist, das durch Ausbildung von Vorsprüngen 48 oder dergleichen dem Heizelement 42 eine vergrößerte Oberfläche 50 verleiht.

Außerhalb der Leitung 16 befindet sich eine Magnetfeld-Erzeugungseinheit 52, die einen von einem (Wechsef-)Strom durchflossenen und möglichst nahe zur ferromagnetischen Schicht 44 angeordneten Spulenkörper 54 aufweist und ein wechselndes Magnetfeld 56 erzeugt. Der Spulenkörper 54 wird durch eine Ansteuereinheit 58 der Magnetfeld-Erzeugungseinheit 52 angesteuert. Die Magnetfeldlinien des Spulenkörpers 54 verlaufen durch die ferromagnetische Schicht 44, wobei das alternierende Magnetfeld 56 in der ferromagnetischen Schicht 44 des Heizelements 42 Wirbelströme induziert, die in Wärme umgesetzt werden, weiche über die vergrößerte Oberfläche 50 des Heizelements 42 an das Wärmeträgermedium abgegeben wird. Die Frequenz des Magnetfelds liegt z.B. typischerweise bei 25 bis 50 kHz.

Das ferromagnetische Material 44 sollte einen ausreichend höheren spezifischen Widerstand aufweisen als das Material, aus dem der Spulenkörper 54 besteht (z.B. Kupfer), was bei Induktionsheizungen grundsätzlich bekannt ist. Dies ist z.B. bei Eisen als ferromagnetisches Material 44 der Fall. Alternative ferromagnetische Materialien sind z.B. Cobalt und Nickel.

Der Spulenkörper 54 bildet mit (nicht dargestellten) Kondensatoren einen Schwingkreis, der z.B. von IGBT-Transistoren angesteuert und angetrieben werden kann. Hierzu existieren im Stand der Technik entsprechende Schalungskonzepte. Die Schaltungstransistoren werden z.B. mit im Resonanzkreis liegenden Stromwandlern gesteuert und aus einer Gleichspannung gespeist. Eine Pulsweitenansteuerung ermöglicht die Leistungsregelung des Resonanzkreises. Die Störemissionen sind beherrschbar. Induktionsfelder arbeiten im unteren Langwellenbereich und emittieren elektromagnetische Wellen bei diesen Frequenzen. Die Arbeitsfrequenz liegt jedoch unterhalb ziviler Langwellensender und auch unterhalb der unteren Messgrenze zur Prüfung der elektromagnetischen Störaussendung (150 kHz). Weitere Störungen bei höheren Frequenzen werden durch die Leistungshalbleiter (IGBT) erzeugt; sie sollten hinsichtlich Netzrückwirkung (leitungsgebundene Störungen) und Abstrahlung so gering wie auch bei anderen Anwendungen im Kfz sein. Durch die Anwendungen eines Ferromaterials mit einer Curie-Temperatur zwischen 120°C und 160°C kann die magnetische Maximaltemperatur des Heizkörpers automatisch begrenzt werden.

### BEZUGSZEICHENLISTE

- 10: Heizkreislauf
- 10': Heizkreislauf
- 12: Fahrzeug
- 14: Batterie
- 16: Leitung
- 18: Pumpe
- 20: Induktionsheizung
- 22: Wärmetauscher
- 24: Luftstrom
- 26: Gebläse
- 28: Wärmetauscher
- 30: Luftstrom
- 32: Gebläse
- 42: Heizelement
- 44: Schicht aus ferromagnetischem Material
- 46: wärmeleitendes Material
- 48: Vorsprünge
- 50: Oberfläche
- 52: Magnetfeld-Erzeugungseinheit
- 54: Spulenkörper
- 56: wechselndes Magnetfeld
- 58: Ansteuereinheit

## Patentansprüche

1. Elektrische Heizung für ein Fahrzeug mit Elektro- oder Hybridantrieb, mit
- einem Heizelement (42) zum Erwärmen eines strömenden, flüssigen Wärmeträgermediums,
- wobei das Heizelement (42) ein von dem Wärmeträgermedium benetzbares und/oder durch- und/oder umströmbares ferromagnetisches Material (44) aufweist, und
- einer Magnetfeld-Erzeugungseinheit (52) zur Erzeugung eines wechselnden Magnetfeldes (56), in welchem das Heizelement (42) angeordnet ist,
**dadurch gekennzeichnet**,
- dass stromab des Heizelements (42) ein mit dem Wärmeträgermedium in thermischem Kontakt stehender Wärmetauscher (22,28) zur Abgabe von Wärme an seine Umgebung angeordnet ist und
- dass durch das Magnetfeld (56) in das ferromagnetische Material (44) des Heizelements (42) Wirbelströme zum Erwärmen des Heizelements (42) induzierbar sind.

2. Elektrische Heizung nach Anspruch 1, **dadurch gekennzeichnet, dass** die Magnetfeld-Erzeugungseinheit (52) einen elektrischen Spulenkörper (54) aufweist, der insbesondere feststehend angeordnet ist.

3. Elektrische Heizung nach Anspruch 1 oder 2, **dadurch gekennzeichnet, dass** das Heizelement (42) neben dem ferromagnetischen Material (44) ferner ein weiteres nicht ferromagnetisches Wärmeleitmaterial (46) aufweist, das mit dem ferromagnetischen Material (44) thermisch gekoppelt ist.

4. Elektrische Heizung nach einem der Ansprüche 1 bis 3, **dadurch gekennzeichnet, dass** das Heizelement (42) eine Struktur und/oder Geometrie zur Vergrößerung seiner in Kontakt mit dem Wärmeträgermedium bringbaren Oberfläche aufweist.

5. Elektrische Heizung nach einem der Ansprüche 1 bis 4, **dadurch gekennzeichnet, dass** die Magnetfeld-Erzeugungseinheit (52) außerhalb einer das strömende Wärmeträgermedium führenden Leitung (16) angeordnet ist.

6. Elektrische Heizung nach einem der Ansprüche 1 bis 5, **dadurch gekennzeichnet, dass** das ferromagnetische Material (44) eine Curie-Temperatur unterhalb einer vorgebbaren sicherheitskritischen Höchsttemperatur aufweist, die insbesondere zwischen 100 °C bis 160 °C liegt.

7. Elektrische Heizung nach einem der Ansprüche 1 bis 6, **dadurch gekennzeichnet, dass** der Wärmetauscher (22,28) mit einer zu erwärmenden Batterie (14) direkt oder indirekt thermisch koppelbar ist.

8. Elektrische Heizung nach Anspruch 7, gekennzeichnet durch ein Gebläse (32) zur Erzeugung eines Luftstroms (24), der den zur Erwärmung der Batterie (14) vorgesehenen Wärmetauscher (22) passiert und in dem stromab des Wärmetauschers (22) die Batterie (14) angeordnet ist.

9. Elektrische Heizung nach einem der Ansprüche 1 bis 6, **dadurch gekennzeichnet, dass** der Wärmetauscher (28) in einem in einen Innenraum des Fahrzeuges (12) einleitbaren Luftstrom (30) angeordnet ist.

10. Elektrische Heizung nach Anspruch 8, **dadurch gekennzeichnet, dass** stromab des Heizelements (42) ein weiterer Wärmetauscher (28) insbesondere in Serie mit dem zur Erwärmung der Batterie (14) vorgesehenen Wärmetauscher (22) angeordnet ist, dass der weitere Wärmetauscher (28) in thermischem Kontakt mit dem Wärmeträgermedium steht und dass der weitere Wärmetauscher (28) in einem in einen Innenraum des Fahrzeuges (12) einleitbaren Luftstrom (30) angeordnet ist.

## Claims

1. Electric heating for a vehicle with electric or hybrid drive, comprising
- a heating element (42) for heating a flowing liquid heat-carrier medium,
- said heating element (42) comprising a ferromagnetic material (44) adapted to be wetted by the heat-carrier medium and/or to have the heat-carrier medium flowing therearound, and
- a magnetic field generating unit (52) for generating a variable magnetic field (56) in which the heating element (42) is arranged,
**characterized in that**,
- downstream of the heating element (42), a heat exchanger (22,28) for dissipating heat to its environment is arranged, said heat exchanger being in thermal contact with the heat-carrier medium, and
- by the magnetic field (56), eddy currents for heating the heating element (42) can be induced into the ferromagnetic material (44) of the heating element (42).

2. Electric heating according to claim 1, **characterized in that** the magnetic field generating unit (52) comprises an electromagnetic coil body (54) which particularly is stationary.

3. Electric heating according to claim 1 or 2, **characterized in that** the heating element (42) comprises, apart from the ferromagnetic material (44), a further, non-ferromagnetic heat-conducting material (46) which is thermally coupled to the ferromagnetic material (44).

4. Electric heating according to any one of claims 1 to 3, **characterized in that** the heating element (42) comprises a structure and/or geometry for enlarging its surface which can be brought into contact with the heat-carrier medium.

5. Electric heating according to any one of claims 1 to 4, **characterized in that** the magnetic field generating unit (52) is arranged outside a conduit (16) conducting the flowing heat-carrier medium.

6. Electric heating according to any one of claims 1 to 5, **characterized in that** the ferromagnetic material (44) has a Curie temperature below a presettable safety-critical maximum temperature particularly in the range from 100°C to 160°C.

7. Electric heating according to any one of claims 1 to 6, **characterized in that** the heat exchanger (22,28) is directly or indirectly thermally coupled to a battery (14) which is to be heated.

8. Electric heating according to claim 7, **characterized by** a blower (32) for generating an air flow (24) which passes the heat exchanger (22) provided for heating the battery (14) and which has the battery (14) arranged in it downstream of the heat exchanger (22).

9. Electric heating according to any one of claims 1 to 6, **characterized in that** the heat exchanger (28) is arranged in an air flow (30) which can be fed into an interior of the vehicle (12).

10. Electric heating according to claim 8, **characterized in that**, downstream of the heating element (42), a further heat exchanger (28) is arranged, particularly in series with the heat exchanger (22) provided for heating the battery (14), that said further heat exchanger (28) is in thermal contact with the liquid heat-carrier medium and that said further heat exchanger (28) is arranged in an air flow (30) which can be fed into an interior of the vehicle (12).

## Revendications

1. Chauffage électrique pour un véhicule avec groupe moteur électrique ou hybride, avec
- un élément chauffant (42) pour chauffer un fluide liquide caloporteur,
- l'élément chauffant (42) comprenant un matériau ferromagnétique (44) mouillable et/ou pouvant être traversé ou balayé par le fluide caloporteur et
- une unité génératrice de champ magnétique (52) pour engendrer un champ magnétique variable (56) dans lequel l'élément chauffant (42) est disposé,
**caractérisé en ce que**
- en aval de l'élément chauffant (42) est disposé un échangeur de chaleur (22, 28) pour émettre de la chaleur à son entourage, qui est en contact thermique avec le fluide caloporteur, et
- en ce que des courants de Foucault peuvent être induits dans le matériau ferromagnétique (44) de l'élément chauffant (42) par le champ magnétique (56) pour chauffer l'élément chauffant (42).

2. Chauffage électrique selon la revendication 1, **caractérisé en ce que** l'unité génératrice de champ magnétique (52) comprend un corps de bobine électrique (54) qui est notamment disposé en position fixe.

3. Chauffage électrique selon la revendication 1 ou 2, **caractérisé en ce que** l'élément chauffant (42) comprend, outre le matériau ferromagnétique (44), un autre matériau caloporteur (46), non ferromagnétique, qui est accouplé thermiquement au matériau ferromagnétique (44).

4. Chauffage électrique selon l'une des revendications 1 à 3, **caractérisé en ce que** l'élément chauffant (42) présente une structure et/ou géométrie adaptée pour augmenter sa surface pouvant être mise en contact avec le fluide caloporteur.

5. Chauffage électrique selon l'une des revendications 1 à 4, **caractérisé en ce que** l'unité génératrice de champ magnétique (52) est disposée à l'extérieur d'un conduit (16) porteur du fluide caloporteur.

6. Chauffage électrique selon l'une des revendications 1 à 5, **caractérisé en ce que** le matériau ferromagnétique (44) présente une température de Curie en-dessous d'une température maximale prédéterminée critique en termes de sécurité, notamment située entre 100 °C et 160 °C.

7. Chauffage électrique selon l'une des revendications 1 à 6, **caractérisé en ce que** l'échangeur de chaleur (22, 28) est adapté pour être thermiquement accouplé, directement ou indirectement, à une batterie (14) à chauffer.

8. Chauffage électrique selon la revendication 7, **caractérisé par** une soufflerie (32) pour engendrer un courant d'air (24) qui passe l'échangeur de chaleur (22) prévu pour chauffer la batterie (14) et dans lequel est disposé la batterie (14) en aval de l'échangeur de chaleur (22).

9. Chauffage électrique selon l'une des revendications 1 à 6, **caractérisé en ce que** l'échangeur de chaleur (28) est disposé dans un courant d'air (30) pouvant être introduit dans un espace intérieur du véhicule (12).

10. Chauffage électrique selon la revendication 8, **caractérisé en ce qu'**un échangeur de chaleur (28) supplémentaire est disposé en aval de l'élément chauffant (42), notamment en série avec l'échangeur (22) prévu pour le chauffage de la batterie (14), **en ce que** l'échangeur de haleur supplémentaire (28) est en contact thermique avec le fluide caloporteur et **en ce que** l'échangeur de chaleur supplémentaire (28) est disposé dans un courant d'air (30) pouvant être introduit dans un espace intérieur du véhicule (12).
